# EUROPEAN PATENT SPECIFICATION

(11) **EP 1 003 653 B1**
(45) Date of publication and mention of the grant of the patent: **07.06.2006**
(21) Application number: 98937297.4
(22) Date of filing: 31.07.1998
(51) Int. Cl.: B60R 21/26

(54) **MINIATURE INFLATOR**
MINIATUR-AUFBLASVORRICHTUNG
GONFLEUR MINIATURE

(30) Priority: 21.08.1997 US 916137
(43) Date of publication of application: 31.05.2000
(73) Proprietor: AUTOMOTIVE SYSTEMS LABORATORY INC., Farmington Hills, Michigan 48331 (US)
(72) Inventor: VITEK, Janie, M., Commerce, MI 48382 (US); SLAGER, John, M., Macomb, michigan 48044 (US)
(74) Representative: Smith, Samuel Leonard
(86) International application number: PCT/US1998/015859
(87) International publication number: WO 1999/008907

(56) References cited:
- EP-A- 0 587 900
- US-A- 4 131 299
- US-A- 5 048 862
- US-A- 5 294 414
- US-A- 5 551 724
- US-A- 5 564 738
- US-A- 5 738 373

## Description

### BACKGROUND OF THE INVENTION

The present invention relates generally to side impact gas inflators for automotive passenger restraint systems, and more specifically, to a gas generator therein for improved cooling of combustion gases.

Certain features of a conventional forward-mounted air bag prevent its corresponding use as a side impact air bag. The size of the inflator constitutes one primary difference. The speed of deployment is yet another difference; to meet design specifications, side impact air bags must deploy significantly faster than forward-mounted air bags. Generally speaking, side impact inflators that are stored within the seat are desirable. One drawback, however, is that the size of the inflator may significantly detract from the comfort of the seat. Because of this, many known forward-mounted inflator systems are simply to large and to slow to function as a seat-mounted side impact air bag. It is therefore desirable that the side impact inflator be substantially smaller and deploy significantly faster than its forward-mounted counterpart.

The size limitation may pose several disadvantages with regard to inflator operability. For example, heat, as well as particulates, in the combustion of gases produced by a pyrotechnic inflator of a vehicle occupant restraint system, must be attenuated prior to discharge thereof into the passenger compartment of the vehicle. While the industry has been successful in meeting current standards through the use of azide propellants, the advent of a new class of nonazide propellants has complicated the problem due to high combustion temperatures and due to the characteristics of particulate combustion. A reduction in inflator size would likely correspond to a reduction in the size of the filter and heat sink within the gas generator. Because nonazide fuels, as compared to azide fuels, generally combust at greater temperatures, a more effective heat sink is required to shield the occupants from high heat exposure during air bag deployment. Additionally, the smaller inflator must be equipped with a filter that will effectively separate the solid and gaseous products of combustion. It is therefore further desirable that a smaller side air bag be equipped with a heat sink and filter every bit as effective as those within a conventional inflator.

Finally, the smaller air bag must deploy within 30 miliseconds or less to ensure occupant protection. Any longer deployment speed significantly detracts from the usefulness and protective capability of a side impact air bag. Therefore, although a smaller inflator will often correspond to a smaller amount of propellant, the gas generating capabilities must sufficiently, pressurize the air bag and must also result in deployment speeds faster than those associated with larger inflators.

Thus, there is a requirement for a side impact air bag inflator that rapidly deploys and utilizes the many attributes of a non-azide propellant, and yet meets all current and projected standards for heat attenuation and particulate filtration from the gas produced.

EP-A-0 5 87 900 illustrates a gas generator having concentric combustion and filtration chamber, the filtration chamber surrounding the combustion chamber and containing an axially extending filter. Openings from the combustion chamber to the filtration chamber are positioned at the opposite axial end to openings out of the filtration chamber.

US 5,048,862 describes a gas generator for an airbag having a cylindrical pressure reservoir filled with gas-releasing materials. The gas generator is especially suitable for an airbag intended to prevent primarily only the impacting of the driver's head against the steering column. A chamber is provided around the cylindrical pressure reservoir and contains a filter. An igniter is positioned at a first end of the cylindrical pressure reservoir and radially facing gas passage openings are provided at the opposite second end communicating with the chamber. At the first end adjacent the igniter, the chamber is provided with axially facing gas outlet openings,

US 5,551,724 describes a hybrid inflator including a combination of stored compressed gas and a gas-generating material. In particular, it describes a hybrid inflator assembly for use in inflating a vehicle inflatable restraint cushion for the passenger side of a vehicle, noting that passenger-side airbags generally are comparatively larger than those used in driver-side assemblies and thus typically require a comparatively larger volume of inflating gas. The described inflator assembly includes an elongated generally cylindrically shaped pressure vessel having within it an axially positioned gas generator housing feeding a coaxial cylindrical structure composed of a filter material. Gases from the gas generator housing move into the filter material structure, flowing radially through the cylindrical wall of the filter material structure and axially out of its far end. Flow then continues axially back along past the outside of the gas generator housing and out through gas exit ports in the inflator assembly.

US 4,131,299 discloses a gas generator for an inflatable vehicle safety bag to be fitted in a steering wheel. The gas generator includes a central chamber forming a squib holder containing an ignition squib. Around the central chamber is formed an intermediate chamber containing a gas generating chemical agent. In the vicinity of the vertical mid portion, a plurality of openings join the central chamber to the intermediate chamber allowing the squib to ignite the gas generating chemical agent. An outer chamber outside the intermediate chamber accommodates a heat absorbing and filtering material. Apertures at one end of the gas generator connect the intermediate chamber to the outer chamber and apertures at the other end of the gas generator provide a gas outlet from the outer chamber. Midway along the length of the outer chamber, a ring extends inwardly so as to divert the direction of gas flow. Different arrangements of wire gauze are provided respectively either side of the ring.

JP 08 310 336A describes an air bag device which is intended to have a reduced size in a seat back thickness direction by providing a bag body for a vehicle seat, providing an inflator which expands the bag body along a vehicle side door at side collision, holding the inflator by a fixed means and fixing the bag body in held condition. An inflator is held by a holding plate and they are provided in a bag body.

A base plate is applied onto an extension part and top end part of the holding plate through a bag body and a weld bolt is passed through the base part of the base plate so as to assemble the base plate integrally with the holding plate. Mounting bolts are inserted into a mounting part and an air bag device is assembled to a seat bag. Upon side collision, high pressure gas is injected from the gas injecting part of the inflator, rectified at the rectifying part of the holding plate and the bag body is inflated. The rectifying part is used also as a diffuser such that the number of parts is reduced. Because the inflator is of a columnar type, the device can be downsized.

### SUMMARY OF THE INVENTION

According to the present invention, there is provided a side impact air bag inflator as defined in appended claim 1.

The aforesaid problem is thus solved, in accordance with a preferred constructed embodiment of the present invention, by a gas generator comprising a propellant chamber having a propellant bed that is ignitable at a first end of the chamber and through which combustion proceeds to a second end of the chamber. The products formed from combustion are then forced radially out of the second end and flow longitudinally back towards the first end through a filter and heat sink assembly. The resetting gases are then forced out of inflation ports located in the generator housing at the first end of the generator. The generator comprises a plurality of apertures fixed at the second end of the propellant chamber. The chamber apertures fluidly communicate with the filter and heat sink assembly, thereby facilitating longitudinal flow of the combustion gases down through the propellant chamber and then up through the filter assembly.

### BRIEF DESCRIPTION OF THE DRAWINGS

Fig. 1 is a cross-sectional view of an automotive air bag inflator constructed in accordance with the instant invention; and
Fig. 2 is a sectional elevation of an automotive air bag inflator taken along the line 2-2 of Fig. 1.

### DETAILED DESCRIPTION OF THE PREFERRED EMBODIMENT(S)

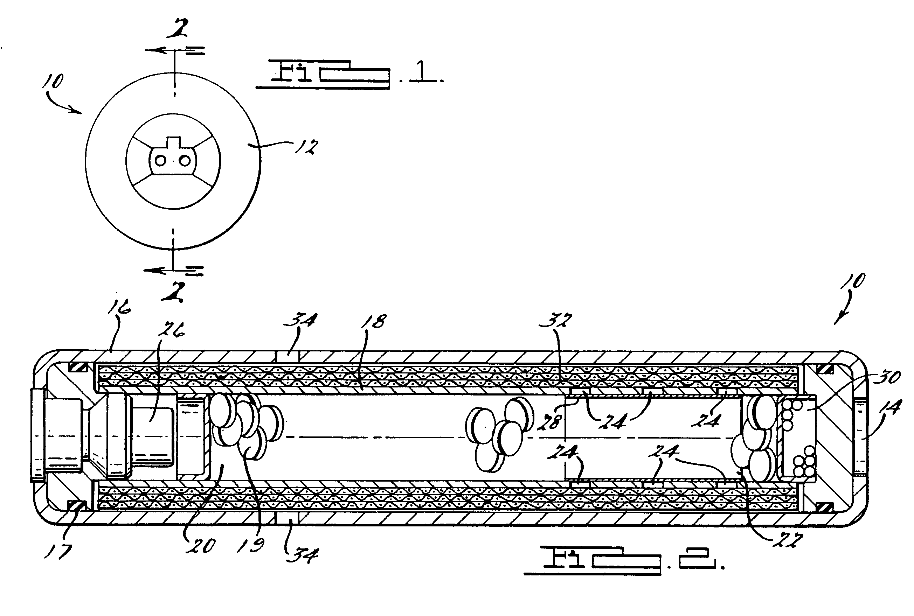

As shown in Figs 1 and 2, in accordance with an exemplary constructed embodiment of the invention, an improved side impact air bag inflator 10 comprises a housing 12, for example, an aluminum forging, having steel tubing comprising a first end closure 14 at one end, and a second end-closure 16 at the opposite end, both of which are crimped in place. An O-ring 17 provides proper sealing. A propellant chamber or tube 18 having a proximal end 20 and a distal end 22 is centrally and longitudinally disposed within housing 12. A plurality of exhaust perforations 24 are formed in the tube 18 only about the distal end 22.

The end-closure 16 accepts an electric igniter 26, which initiates combustion of the propellant 19 within propellant chamber 18 in a manner well known to one skilled in the art. A burst foil 28 may be provided along the inner edge of distal end 22 and over the apertures 24, thereby facilitating pressure buildup and flame front propagation through the propellant 19 disposed internally of the propellant chamber 18.

An autoignition assembly or self-igniter 30 is also disposed within propellant chamber 18 at distal end 22, and functions as an auxiliary igniter. A filter assembly 32 is positioned radially outwardly about the propellant chamber 18, and provides a flow path for the inflation gas to reach inflation ports 34.

In operation, the electric initiator 26 is fired into the propellant chamber 18. As gas is generated, it flows downward through the propellant bed to insure that all propellant in the chamber is ignited quickly. In the preferred embodiment, the present invention may utilize relatively smaller propellant pellets. As shown by the arrows in Fig. 2, gas radially exits the propellant chamber through the perforated holes 24 located only in the lower or axially outward portion of the combustion chamber relative to the initiator. The gas then flows upward through the filter screen 32 to cool the gas and capture any solid particulates therein. The gas then exits the inflator via inflation ports 34.

In accordance with the present invention, an axial or longitudinal gas flow path is generated by virtue of the position of apertures 24. Once the propellant grains 19 are ignited at the first end of chamber 18, the small size of the propellant grains combined with the location of the apertures 24 accelerates the heat and gases through the propellant bed and increases the rate of combustion. After combustion gases radially exit chamber 18 through apertures 24, the gases flow radially and longitudinally back through the filter 32. As such, the gases are sufficiently filtered and cooled prior to exiting the generator through the ports 34, even though the generator 10 is smaller than those normally utilized in conventional forward-mounted inflator systems.

It will be understood that the foregoing description of the preferred embodiment of the present invention is for illustrative purposes only, and that the various structural and operational features herein disclosed are susceptible to a number of modifications, none of which departs from the spirit and scope of the present invention as defined in the appended claims.

## Claims

1. A side-impact air bag inflator comprising:
an elongated cylindrical housing (12) having a proximate end (16), a distal end (14) and a first plurality of radially opening circumferentially-disposed apertures (34) at the proximate end,
a propellant chamber (18) disposed centrally of said housing (12) comprising proximate (20) and distal (22) ends corresponding to the proximate and distal ends of said housing (12);
a second plurality of apertures (24) radially disposed about the distal end (22) of said propellant chamber (18) for directing combustion gases radially from said propellant chamber (18);
a propellant in said propellant chamber (18),
means (26) for igniting said propellant, and
an elongated cylindrical filter (32) coextensive with said housing (12) and disposed radially outwardly of said propellant chamber (18) and radially inwardly of an inner wall of said housing (12); wherein:
the means (26) for igniting said propellant is at the proximate end (20) of said propellant chamber (18) for igniting the propellant at the proximate end (20) of the propellant chamber (18) such that combustion proceeds to the distal end (22) of the propellant chamber (18).

## Patentansprüche

1. Seitenairbagaufblasvorrichtung mit:
- einem langgestreckten zylindrischen Gehäuse (12), das ein proximales Ende (16), ein distales Ende (14) sowie eine erste Mehrzahl von sich radial öffnenden, in Umfangsrichtung angeordneten Öffnungen (34) an dem proximalen Ende umfasst;
- einer in der Mitte des Gehäuses (12) angeordneten Treibmittelkammer (18), die ein proximales (20) und ein distales (22) Ende umfasst, die mit dem proximalen und distalen Ende des Gehäuses (12) korrespondieren;
- einer zweiten Mehrzahl von Öffnungen (24), die radial um das distale Ende (22) der Treibmittelkammer (18) angeordnet sind, um Verbrennungsgase radial aus der Treibmittelkammer (18) zu leiten;
- einem Treibmittel in der Treibmittelkammer (18);
- einer Einrichtung (26) zum Zünden des Treibmittels; und
- einem langgestreckten zylindrischen Filter (32), der sich koextensiv zu dem Gehäuse (12) erstreckt und radial außerhalb der Treibmittelkammer (18) sowie radial innerhalb einer Innenwand des Gehäuses (12) angeordnet ist, wobei sich die Einrichtung (26) zum Zünden des Treibmittels am proximalen Ende (20) der Treibmittelkammer (18) befindet, um das Treibmittel am proximalen Ende (20) der Treibmittelkammer (18) zu zünden, sodass die Verbrennung zum distalen Ende (22) der Treibmittelkammer (18) fortschreitet.

## Revendications

1. Dispositif de gonflage de coussin gonflable pour impact latéral comprenant :
un boîtier cylindrique oblong (12) comportant une extrémité proximale (16), une extrémité distale (14) et une première pluralité d'ouvertures (34) disposées circonférentiellement et débouchant radialement au niveau de l'extrémité proximale ;
une chambre pour propulseur (18) disposée de façon centrale dans ledit boîtier (12) comprenant une extrémité proximale (20) et une extrémité distale (22) qui correspondent aux extrémités proximale et distale dudit boîtier (12) ;
une deuxième pluralité d'ouvertures (24) disposées radialement autour de l'extrémité distale (22) de ladite chambre pour propulseur (18), destinées à diriger les gaz de combustion radialement depuis ladite chambre pour propulseur (18) ;
un propulseur dans ladite chambre pour propulseur (18) ;
un moyen (26) de mise à feu dudit propulseur ; et
un filtre cylindrique oblong (32) s'étendant dans la même direction que ledit boîtier (12) et disposé radialement vers l'extérieur par rapport à ladite chambre pour propulseur (18) et radialement vers l'intérieur par rapport à une paroi intérieure dudit boîtier (12) ; dans lequel :
le moyen (26) de mise à feu dudit propulseur est situé au niveau de l'extrémité proximale (20) de ladite chambre pour propulseur (18) en vue de mettre à feu le propulseur à l'extrémité proximale (20) de la chambre pour propulseur (18) de telle manière que la combustion progresse jusqu'à l'extrémité distale (22) de la chambre pour propulseur (18).
